# EUROPÄISCHE PATENTSCHRIFT

(11) **EP 0 904 978 B1**
(45) Veröffentlichungstag und Bekanntmachung des Hinweises auf die Patenterteilung: **26.02.2003**
(21) Anmeldenummer: 97116159.1
(22) Anmeldetag: 17.09.1997
(51) Int. Cl.: B60P 1/00, B60P 1/60

(54) **Laderaum eines Transportfahrzeuges für Schüttgut**
Loading space for bulk material on transport vehicles.
Espace de chargement pour les produits en vrac pour des véhicules de transport.

(43) Veröffentlichungstag der Anmeldung: 31.03.1999
(73) Patentinhaber: Gass International Logistics GmbH & Co. KG, 77756 Hausach (DE)
(72) Erfinder: Gass, Josef, 77756 Hausach (DE); Disselhoff, Jan-Peter, 77756 Hausach (DE); Diener, Klaus, 76571 Gaggenau (DE)
(74) Vertreter: Büchel, Kurt F.

(56) Entgegenhaltungen:
- EP-A- 0 053 412
- WO-A-81/00555
- WO-A-94/06648
- DE-A- 3 021 869
- DE-B- 1 024 883
- US-A- 5 199 826

## Beschreibung

Die Erfindung bezieht sich auf einen Laderaum nach dem Oberbegriff des Anspruches 1.

Beim Transport von leichten Schüttgütern, wie etwa silierbarem Granulat oder Pulver, wird die mit einem Transportfahrzeug transportierbare Menge nicht durch das Gewicht, sondern durch das Volumen des Laderaumes beschränkt. Daher muss ein Transportfahrzeug für den effizienten Transport solcher Güter innerhalb der zulässigen Standard-Aussenmasse ein möglichst grosses Ladevolumen bereitstellen. Zudem ist es äusserst wichtig, dass das Befüllen und Entleeren mit minimalem Aufwand, schnell und jeweils so vollständig wie möglich erfolgen kann. Insbesondere nach dem Entleeren muss nämlich gewährleistet sein, dass im wesentlichen alles Schüttgut ausgetragen ist, so dass es beim anschliessenden Transport eines anderen Gutes nicht zu unerwünschten Verunreinigungen kommt. Bei einer einfachen Lösung wird auf einer normalen Ladefläche ein grosser Kunststoffsack bereitgestellt und dann mit Schüttgut befüllt. Am Bestimmungsort wird das Schüttgut mit einer Absaugvorrichtung des Bestimmungsortes aus dem Kunststoffsack abgesaugt. Mit den gängigen Säcken kann das mögliche Volumen auf der Ladefläche nicht vollständig ausgenützt werden. Zudem muss beim Entleeren, bzw. am Bestimmungsort eine von oben in den Sack einführbare Absaugvorrichtung vorhanden sein.

Aus der gattungsgemässen WO 94/06648 ist eine Einlage für den Transport von Schüttgut in einem Container bekannt. Diese Einlage besteht aus gasdurchlässigen und gasundurchlässigen Schichten sowie Ab- bzw. Zuleitungen für Gase. Während oder nach dem Beladen kann das in die Einlage eingebrachte Schüttgut durch Absaugen von Luft verdichtet werden.

Wenn das Schüttgut direkt in einen geschlossenen Laderaum gefüllt wird, kann wohl das ganze Volumen genützt werden, aber es ergeben sich dann beim Entleeren Probleme. Wie auch bei der Verwendung von Säcken muss eine Absaugvorrichtung vorhanden sein. Wenn lediglich an einer direkt bei der Ladefläche angeordneten Absaugöffnung abgesaugt wird, so bleibt ein zu grosser, nicht absaugbarer Restanteil im Laderaum zurück. Um diesen Anteil zu verkleinern, wurden schon über die Ladefläche verlaufende Sammelrohre mit Eintrittsöffnungen in den Rohrwänden eingesetzt. Mit diesen Rohren konnte der verbleibende Restanteil verkleinert, aber nicht beseitigt werden. Wenn nun der verbleibende Restanteil manuell beseitigt werden musste, war dies aufgrund der schlechten Begehbarkeit der Ladefläche und der versteckten Bereiche bei den Rohren äusserst mühsam.

Um ein gutes Austrittsverhalten zu gewährleisten, ist es auch möglich, leichtes Schüttgut in Silofahrzeugen zu transportieren. Das Silovolumen ist aber kleiner als das mit einem Laderaum erzielbare maximale Lade-Volumen. Zudem muss das Silo beim Entleeren auf der einen Seite etwas angehoben werden, um zu gewährleisten, dass alles Schüttgut zur Siloöffnung rutscht. Weil das Schüttgut am Bestimmungsort häufig in einem Innenraum entleert wird, ist es aufgrund der baulichen Verhältnisse häufig nicht möglich, das Silo genügend stark zu neigen. Weitere Nachteile von Silos bestehen darin, dass diese ein hohes Gewicht haben und eine aufwendige Halte- und Betätigungsvorrichtung benötigen.

Ein Beispiel für ein Silofahrzeug zum Transport staubförmiger Güter wird in der DE 30 21 869 A1 geoffenbart. Das Fahrzeug kann mit Hilfe einer pneumatischen Fördervorrichtung entladen werden, wobei durch eine geeignete Anbringung von Filtern am Fahrzeug ein staubfreies Umfüllen der Ladung in ein Standsilo ermöglicht werden soll.

In der US 5,199,826 wird ein LKW-Anhänger bzw. Auflieger zum Transport von Schüttgut gezeigt. Durch ein Kippen des Anhängers rutscht das Schüttgut zu einer Fördereinrichtung, die aus einer Zuleitung für Gase und einer Ableitung für das Schüttgut besteht und mittels einer Pumpe betrieben wird.

Die deutsche Auslegeschrift DE 1 024 883 beschreibt ein Behälterfahrzeug für staubförmiges oder körniges Schüttgut mit einem trommelförmigen, horizontal liegenden Behälter. Zum Entladen wird der Behälterinhalt durch Einblasen von Luft unter schräg geneigte Zwischenböden in einen flüssigkeitsähnlichen Zustand versetzt und wie eine Flüssigkeit aus dem Behälter hinausgedrückt.

Der Erfindung liegt nun die Aufgabe zugrunde, eine einfache Lösung zu finden, die gewährleistet, dass Schüttgut in einem möglichst grossen Ladevolumen eines Transportfahrzeuges transportiert werden kann und dass der Austrag mit kleinem Aufwand möglichst vollständig erfolgt.

Diese Aufgabe wird durch die Merkmale des Anspruches 1 gelöst.

Wenn der Boden eines Laderaumes als doppelter Boden ausgebildet wird, bei dem über einer unteren, im wesentlichen dichten Abschlussfläche und von ihr beabstandet eine Lochfläche mit Durchtrittsöffnungen angeordnet ist, so kann das Schüttgut aus allen Bereichen des Laderaumes abgesaugt werden. Die Ladefläche, bzw. die Lochfläche ist eben und somit problemlos begehbar, und es gibt keine sich verengenden Bereiche, in denen sich Schüttgut festsetzen kann. Die mindestens eine Austrittsöffnung ist mit dem Zwischenraum zwischen der Abschluss- und der Lochfläche verbunden, so dass das durch die Austrittsöffnung aus dem Laderaum herausgesaugt werden kann, wobei das Schüttgut vom Laderaum durch die Durchtrittsöffnungen der Lochfläche in den Zwischenraum gelangt.

Bevorzugt besteht die Lochfläche aus auswechselbaren Lochblechen, sodass derselbe Laderaum durch einfache Handgriffe für den Transport von Schüttgütern verschiedener Korngrösse dadurch optimiert werden kann, dass auf das jeweilige Schüttgut angepasste Lochbleche unterschiedlichen Lochdurchmessers eingesetzt werden.

Der Zwischenraum wird so ausgebildet, dass die Saugleitung, die an die Austrittsöffnung anschliessbar ist, den Zwischenraum vollständig entleeren kann. Dazu wird der Zwischenraum vorzugsweise mit mindestens einer Bodentrennwand in mindestens zwei Bodenteilräume mit je einer Austrittsöffnung unterteilt. Die Bodentrennwände stehen im wesentlichen senkrecht zur Lochfläche, und jeder Bodenteilraum wird von einem Teil der Lochfläche berandet. Eine bevorzugte Unterteilung sieht vor, dass die Bodentrennwände in der Längs- oder aber in der Querrichtung des Laderaumes verlaufen und entsprechend kanalförmige Bodenteilräume gebildet werden. An den Stirnseiten der kanalförmigen Bodenteilräume sind nebeneinander die Austrittsöffnungen angeordnet, die vorzugsweise direkt in einen als Saugbereich dienenden Querraum bzw. Längsraum münden, oder gegebenenfalls über - insbesondere wurzelförmig zusammenführende - Rohrleitungen mit dem Saugbereich verbunden sind. Um die Saugleistung bereitzustellen, ist gegebenenfalls im Bereich des Laderaumes ein Gebläse angeordnet, das saugseitig an den Saugbereich angeschlossen ist und druckseitig eine Förderöffnung aufweist, die mit einer Förderleitung verbindbar ist. Das Gebläse ist vorzugsweise elektrisch mit einem Drehstromantrieb, der ans Stromnetz angeschlossen werden muss, gegebenenfalls aber auch mit einem Hydraulik- oder einem Verbrennungsantrieb antreibbar. Natürlich kann die Saugleistung aber mit einem ortsfesten Geläse erzielt werden.

Die Austrittsöffnungen, die in einen gemeinsamen Saugbereich münden, können vorzugsweise mittels einer steuerbaren Verschlussvorrichtung gezielt verschlossen und geöffnet werden, so dass der Saugbereich mit Teilbereichen der Lochfläche verbindbar ist. Dadurch kann die volle Saugleistung an einen Bodenteilraum angelegt werden, um diesen vollständig zu entleeren.

Um beim Befüllen und Entleeren eines geschlossenen Laderaumes den Aus- bzw. Eintritt von Luft zu ermöglichen, ist jeder geschlossene Ladebereich über eine Luftausgleich-Verbindung, insbesondere mindestens eine Öffnung mit einem Netz oder Gitter, das kleine Durchtrittsöffnungen hat, mit der Umgebung verbindbar. Um den Laderaum in Teilräume unterteilen zu können, ist mindestens eine Laderaumtrennwand so angeordnet, dass der Laderaum in mindestens zwei Ladeteilräume aufgeteilt wird, denen je mindestens ein Bodenteilraum zugeordnet ist, wobei vorzugsweise jeder Bodenteilraum nur an einen Ladeteilraum anschliesst. Dazu wird jede Laderaumtrennwand direkt über einer Bodentrennwand angeordnet.

Der Laderaum ist auf dem Rahmen eines Aufliegers, insbesondere eines EURO-Jumboaufliegers als besonders grossvolumige Aufliegerversion, eines Anhängers, eines LKW's, eines Containers, einer Wechselbrücke oder gegebenenfalls auch eines Eisenbahnwagens oder eines Schiffs-Einbaus aufgebaut, wobei der Aufbau mit festen Elementen als Kofferaufbau oder gegebenenfalls mit Textil- oder Kunststoffbahnen als Planenaufbau ausgeführt ist.

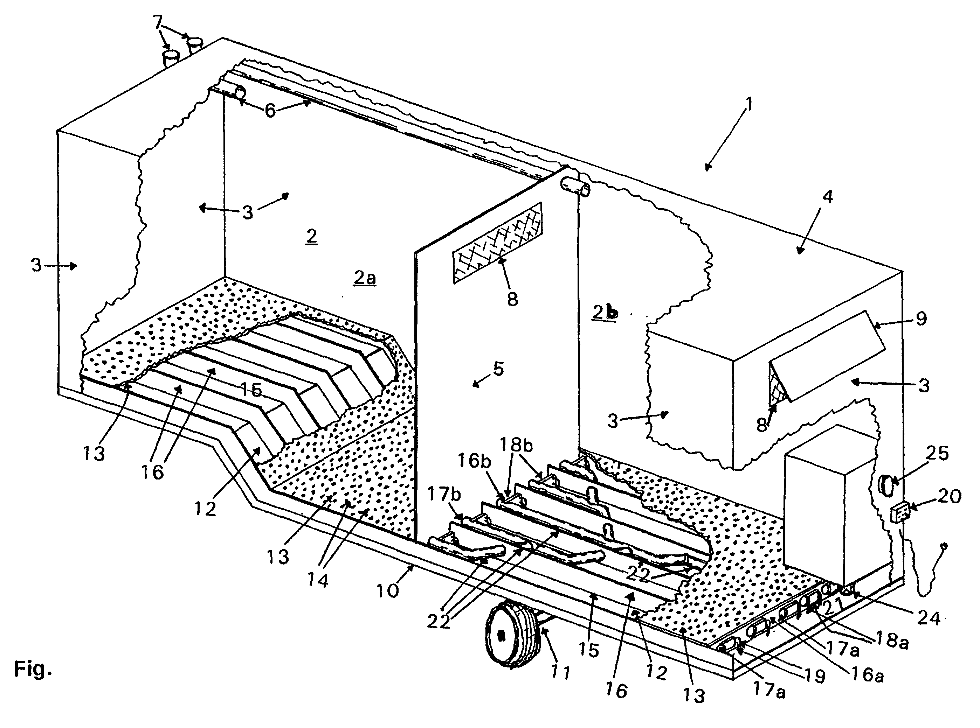

Die Zeichnung erläutert die Erfindung anhand eines Ausführungsbeispieles. Die Figur zeigt eine perspektivische Darstellung des Laderaumes mit teilweise weggelassenen Flächen. Der Laderaum 2 des Aufliegers 1 ist aussen von vier Wänden 3 und einer Decke 4 in Kofferaufbauweise abgeschlossen. In der dargestellten Ausführungsform wird der Laderaum 2 von einer Laderaumtrennwand 5, die quer zur Längsrichtung des Laderaumes 2 angeordnet ist, in zwei Ladeteilräume 2a, 2b unterteilt. Zur Befüllung der Ladeteilräume 2a, 2b sind im Deckenbereich zwei Rohrleitungen 6 angeordnet, die je von einer stirnseitigen Einfüllöffnung 7 in einen Ladeteilraum 2a, 2b führen. Damit die beim Befüllen verdrängte Luft aus den Ladeteilräumen 2a, 2b austreten kann, ist in der Laderaumtrennwand 5 und in der Heckwand 3 eine Öffnung mit einem luftdurchlässigen Gitter 8 angeordnet. Das Gitter 8 der Heckwand ist mit einer Klappe 9 verschliessbar. Beim Befüllen und Entleeren muss diese Klappe 9 geöffnet werden.

Der Boden des Laderaumes 2 wird von einem Rahmen 10 mit einer Radanordnung 11 getragen und ist als Doppelboden ausbildet. In einem Abstand über einer unteren Abschlussfläche 12 ist ein Lochboden bzw. eine Lochfläche 13 angeordnet, der bzw. die mit Durchtrittsöffnungen 14 versehen ist. Die Grösse und Verteilung der Durchtrittsöffnungen 14 wird vorzugsweise auf das zu fördernde Produkt abgestimmt. In einer Ausführungsform für Polystyrolschaumgranulat haben sich Bohrungen mit einem Durchmesser von im wesentlichen 10 mm bewährt. In einer bestimmten Ausführungsform der Erfindung werden die Bohrungen rasterförmig angebracht, wobei etwa ein wabenartiger Raster, bei dem je um eine Bohrung sechs - im wesentlichen in gleichen Winkelabständen um die Bohrung verteilte - nächstliegende Bohrungen in einem Abstand von im wesentlichen 100 mm angebracht sind. Zwischen der Abschlussfläche 12 und der Lochfläche 13 ist ein Zwischenraum ausgebildet. Der Zwischenraum wird vorzugsweise von senkrecht zur Abschlussfläche 12 angeordneten Bodentrennwänden 16 in Bodenteilräume 15 unterteilt.

Bevorzugt sind Parallelkanäle, die durch das Einsetzen von Bodentrennwänden 16 entstehen, die in Laderaumlängs-, gegebenenfalls aber auch in Querrichtung verlaufen können. An einem stirnseitigen Ende der Kanäle bzw. der Bodenteilräume 15 ist an jedem Bodenteilraum 15 - bzw. in einer diesen abschliessenden Bodentrennwand 16a, 16b, die quer zu den anderen Bodentrennwänden 1 6 verläuft - je eine Austrittsöffnung 1 7a, 1 7b ausgebildet, die von einem betätigbaren Schliessorgan 18a, 18b abgeschlossen und geöffnet werden kann. Vorzugsweise wird als Schliessorgan ein mechanisch, insbesondere aber fluidisch, betätigbarer Schieber eingesetzt, der über zwei Fluidleitungen 19 entsprechend der gewünschten Betätigung mit Druck beaufschlagbar ist. Die Fluidleitungen 19 sind unterhalb der Abschlussfläche 12 über steuerbare Ventile mit einer Druckquelle verbunden. Die Ventile werden von einer zentralen Steuerung 20 aus bedient, die vorzugsweise am Heck des Laderaumes angeordnet ist. Die Austrittsöffnungen 17a münden direkt in einen Saugbereich 21, der im betriebsbereiten Zustand als geschlossener Raum entlang der Stirnseiten eines Teils der Kanäle bzw. Bodenteilräume 15 verläuft. In der dargestellten Ausführungsform erstreckt sich der Saugbereich 21 entlang des Laderaumhecks. Es sind aber auch Ausführungsformen möglich, bei denen der Saugbereich im Bereich der Trennwand 5 oder aber in der Längsrichtung des Laderaumes 2 angeordnet ist, wobei dann die Kanäle quer dazu verlaufen.

Im dargestellten Beispiel sind die Kanäle des vorderen Laderaumbereiches bei der Trennwand 5 über die Austrittsöffnungen 17b und Rohrleitungen 22 mit dem Saugbereich 21 verbunden. Die Schliessorgane 18b der Austrittsöffnungen 17b sind im Bereich der Trennwand 5 in die Rohrleitungen 22 eingesetzt. Um die Rohrleitungen zusammenzuführen und dabei aber Verstopfungsgefahren im Knickbereich zu vermeiden, werden die Rohrleitungen vorzugsweise wurzelförmig zusammengeführt, wobei die Richtungsänderungen weniger als 60°, vorzugsweise im wesentlichen 45°, betragen und die Rohrleitungen paarweise verbunden sind. Die gemeinsame Rohrleitung 22' schliesst vorzugsweise über eine Austrittsöffnung 17a mit einem Verschlussorgan 18a an den Saugbereich 21 an. Die Rohrleitungen 22 sind im Zwischenraum bzw. in Bodenteilräumen 15 des hinteren Laderaumbereiches angeordnet, wobei zwischen den Rohrleitungen 22 und der Abschlussfläche 12 sowie der Lochfläche 13 je ein Freiraum belassen wird, um den Durchtritt von Schüttgut nicht zu behindern.

Um den Saugbereich 21 mit einer Saugleistung beaufschlagen zu können, ist dieser zumindest mit einer Anschlussöffnung versehen, an welche die Saugseite eines Geläses bzw. einer Absaugvorrichtung anschliessbar ist. In der dargestellten Ausführungsform ist ein nicht dargestelltes Gebläse in einem kleinen abgeschlossenen Gebläseraum 23 des Laderaumes 2 angeordnet. Das Geläse ist dabei über einen Ansaugstutzen 24 mit dem Saugbereich 21 verbunden. Vom Geläse führt druckseitig eine Förderöffnung aus dem Laderaum 2. Das Gebläse ist von der zentralen Steuerung 20 aus bedienbar. Das Gebläse wird vorzugsweise von einem Elektromotor angetrieben, der über ein Elektroanschlusskabel vom Netz speisbar ist. Weil das Schüttgut in Gebäudenähe entladen wird, kann mit einem Netzanschluss gerechnet werden.

Mit dem erfindungsgemässen Auflieger kann bei einem Laderaumvolumen von 102 m³ ein Volumen von 100 m³ mit Schüttgut beladen werden. Zudem kann ein solcher Auflieger auch mit verschiebbaren oder einsetzbaren Trennwänden, insbesondere aus Stoff- oder Kunststoffbahnen, ausgebildet werden, so dass die Laderaumaufteilung den jeweiligen getrennt zu transportierenden Teilmengen angepasst werden kann; dabei sollen die Trennwände jeweils über Bodenteilraumgrenzen eingesetzt werden, damit deren Inhalte auch getrennt austragbar sind. Zum Befüllen muss für jeden möglichen Ladeteilraum eine Einfüllöffnung vorgesehen werden; gegebenenfalls kann auch ein flexibles Einfüllrohr, dessen innere Öffnung verschiedenen Teilräumen zugeordnet werden kann, eingesetzt werden. Um den Laderaum betretbar zu machen, ist bei Kofferwänden zumindest in einer Wand eine Tür eingesetzt. Bei Planen ist zumindest ein Teilbereich einer Wand lösbar. Aufgrund der ebenen Lochfläche können auch problemlos Stückgüter in Ladeteilräumen befördert werden.

## Patentansprüche

1. Laderaum (2) eines Transportfahrzeugs (1) für Schüttgut, mit mindestens einem, durch zumindest eine Einfüllöffnung (7) befüllbaren und durch zumindest eine Austrittsöffnung entleerbaren, geschlossenen Ladebereich (2a, 2b), der unten von einem Boden abgeschlossen ist, **dadurch gekennzeichnet, dass** der Boden ein doppelter Boden ist, bei dem über einer unteren Abschlussfläche (12) und im Abstand von ihr eine Lochfläche (13), die bevorzugt aus auswechselbaren Lochblechen besteht, mit Durchtrittsöffnungen (14) angeordnet ist, und wobei mindestens eine Austrittsöffnung (17a, 17b) mit dem Zwischenraum zwischen der Abschlussfläche (12) und der Lochfläche (13) verbunden ist, durch die das Schüttgut aus dem Laderaum (2) heraussaugbar ist, wobei das Schüttgut vom Laderaum (2) durch die Durchtrittsöffnungen (14) der Lochfläche (13) in den Zwischenraum gelangt.

2. Laderaum nach Anspruch 1, **dadurch gekennzeichnet, dass** zwischen der Abschlussfläche (12) und der Lochfläche (13) mindestens eine Bodentrennwand (16), vorzugsweise aber mehrere Bodentrennwände (16), so angeordnet ist bzw. sind, dass der Zwischenraum in mindestens zwei Bodenteilräume (15) aufgeteilt wird, die je von einem Teil der Lochfläche (13) berandet sind, wobei jeder Bodenteilraum (15) mit einer Austrittsöffnung (17a, 17b) verbunden ist.

3. Laderaum nach Anspruch 2, **dadurch gekennzeichnet, dass** die Austrittsöffnungen (17a, 17b) in einen gemeinsamen Saugbereich (21) münden und vorzugsweise eine steuerbare Verschlussvorrichtung (18a, 18b, 19, 20) zum wahlweisen Verschliessen und Öffnen der gewünschten Austrittsöffnungen (17a, 17b) vorgesehen ist, so dass der Saugbereich (21) mit Teilbereichen der Lochfläche (13) verbindbar ist.

4. Laderaum nach Anspruch 3, **dadurch gekennzeichnet, dass** die Verschlussvorrichtung (18a, 18b, 19, 20) an jeder Austrittsöffnung (17a, 17b) ein Verschlussorgan (18a, 18b), insbesondere einen Schieber, umfasst, welches bzw. welcher gegebenenfalls mechanisch, vorzugsweise aber fluidisch - hydraulisch oder pneumatisch - betätigbar ist, wobei die Betätigung vorzugsweise von einer zentralen Steuerung (20) aus erfolgt.

5. Laderaum nach Anspruch 3 oder 4, **dadurch gekennzeichnet, dass** ein Gebläse saugseitig an den Saugbereich (21) angeschlossen ist und druckseitig eine Förderöffnung (25) aufweist, die mit einer Förderleitung verbindbar ist, wobei das Gebläse vorzugsweise elektrisch mit einem Drehstromantrieb, der ans Stromnetz angeschlossen werden muss, gegebenenfalls aber auch mit einem Hydraulikoder einem Verbrennungsantrieb antreibbar ist.

6. Laderaum nach einem der Ansprüche 2 bis 5, **dadurch gekennzeichnet, dass** die Bodentrennwände (16) in der Längsrichtung, oder aber in der Querrichtung, des Laderaumes (2) verlaufen und entsprechend kanalförmige Bodenteilräume (15) gebildet werden, an deren Stirnseiten nebeneinander je eine Austrittsöffnung (17a, 17b) angeordnet ist, welche Austrittsöffnungen (17a, 17b) insbesondere direkt in einen als Saugbereich (21) dienenden Querraum bzw. Längsraum münden, oder gegebenenfalls über, insbesondere wurzelförmig zusammenführende, Rohrleitungen (22) mit dem Saugbereich (21) verbunden sind.

7. Laderaum nach einem der Ansprüche 2 bis 6, **dadurch gekennzeichnet, dass** jeder geschlossene Ladebereich (2a, 2b) über eine Luftausgleich-Verbindung, insbesondere mindestens eine Öffnung mit einem Netz oder Gitter (8), das kleine Durchtrittsöffnungen hat, mit der Umgebung verbindbar ist.

8. Laderaum nach einem der Ansprüche 2 bis 7, **dadurch gekennzeichnet, dass** im Laderaum (2) mindestens eine Laderaumtrennwand (5) so angeordnet ist, dass der Laderaum (2) in mindestens zwei Ladeteilräume (2a, 2b) aufgeteilt wird, denen je mindestens ein Bodenteilraum (15) zugeordnet ist, wobei vorzugsweise jeder Bodenteilraum (15) nur einem der mindestens zwei Ladeteilräume (2a, 2b) zugeordnet ist.

9. Laderaum nach Anspruch 8, **dadurch gekennzeichnet, dass** die Einfüllöffnungen (7) aller Ladeteilräume (2a, 2b) direkt nebeneinander angeordnet sind, und dass von den Einfüllöffnungen (7) Einfüllrohre (6) in die jeweiligen Ladeteilräume (2a, 2b) führen.

10. Laderaum nach einem der Ansprüche 1 bis 8, **dadurch gekennzeichnet, dass** der Laderaum (2) auf dem Rahmen eines Aufliegers, insbesondere eines EURO-Jumboaufliegers, eines Anhängers, eines LKW's, eines Containers, einer Wechselbrücke oder gegebenenfalls auch eines Eisenbahnwagens oder eines Schiffs-Einbaus aufgebaut ist, wobei der Aufbau mit festen Elementen als Kofferaufbau oder gegebenenfalls mit Textil- oder Kunststoffbahnen als Planeaufbau ausgeführt ist.

## Claims

1. Loading space (2) for bulk material on a transport vehicle (1), comprising at least one closed loading region (2a, 2b) which can be filled through at least one filling orifice (7) and emptied through at least one outlet orifice and is closed at the bottom by a floor, **characterized in that** the floor is a double floor in which a perforated surface (13) which preferably consists of interchangeable perforated metal sheets and has passages (14) is arranged above a lower closure surface (12) and a distance away from it, at least one outlet orifice (17a, 17b) being connected to the intermediate space between the closure surface (12) and the perforated surface (13), through which outlet orifice bulk material can be sucked out of the loading space (2), the bulk material passing from the loading space (2) through the passages (14) of the perforated surface (13) into the intermediate space.

2. Loading space according to Claim 1, **characterized in that** at least one floor partition (16), but preferably a plurality of floor partitions (16) is or are arranged between the closure surface (12) and the perforated surface (13) in such a way that the intermediate space is divided into at least two partial floor spaces (15), which are each bordered by a part of the perforated surface (13), each partial floor space (15) being connected to an outlet orifice (17a, 17b).

3. Loading space according to Claim 2, **characterized in that** the outlet orifices (17a, 17b) open into a common suction region (21) and a controllable closure device (18a, 18b, 19, 20) for alternatively closing and opening the desired outlet orifices (17a, 17b) is preferably provided so that the suction region (21) can be connected to sections of the perforated surface (13).

4. Loading space according to Claim 3, **characterized in that** the closure device (18a, 18b, 19, 20) at each outlet orifice (17a, 17b) comprises a closure member (18a, 18b), in particular a slide valve, which member or which valve optionally can be operated mechanically, but preferably fluidically - hydraulically or pneumatically, operation preferably being effected from a central control (20).

5. Loading space according to Claim 3 or 4, **characterized in that** a blower is connected on the suction side to the suction region (21) and has, on the pressure side, a delivery orifice (25) which can be connected to a delivery line, the fan preferably being capable of being driven electrically by a three-phase drive which must be connected to the mains power supply, but optionally also capable of being driven by a hydraulic or an internal combustion drive.

6. Loading space according to any of Claims 2 to 5, **characterized in that** the floor partitions (16) run in the longitudinal direction or in the transverse direction of the loading space (2) and accordingly form channel-like floor sections (15) at whose end faces one outlet orifice (17a, 17b) each is arranged side by side, which outlet orifices (17a, 17b) in particular open directly into a transverse space or longitudinal space serving as suction region (21) or optionally are connected via pipelines (22), in particular pipelines (22) converging in the manner of a root, to the suction region (21).

7. Loading space according to any of Claims 2 to 6, **characterized in that** each closed loading region (2a, 2b) can be connected to the environment via an air equilibration connection, in particular at least one orifice having a net or grating (8) which has small passages.

8. Loading space according to any of Claims 2 to 7, **characterized in that** at least one loading space partition (5) is arranged in the loading space (2) in such a way that the loading space (2) is divided into at least two loading sections (2a, 2b), each of which is coordinated with a floor section (15), each floor section (15) preferably being coordinated with only one of the at least two loading sections (2a, 2b).

9. Loading space according to Claim 8, **characterized in that** the filling orifices (7) of all loading sections (2a, 2b) are arranged directly side by side, and that filling pipes (6) lead from the filling orifices (7) into the respective loading sections (2a, 2b).

10. Loading space according to any of Claims 1 to 8, **characterized in that** the loading space (2) is mounted on the frame of a semitrailer, in particular of a EURO Jumbo semitrailer, of a trailer, of a truck, of a container, of a swap body or optionally of a railway wagon or of an interior ship's installation, the superstructure being produced as a box-type superstructure using solid elements or optionally as a tarpaulin superstructure using textile or plastic sheets.

## Revendications

1. Espace de chargement (2) d'un véhicule de transport (1) pour des produits en vrac, avec au moins une zone de chargement (2a, 2b) fermée, pouvant être remplie par au moins une ouverture de remplissage (7) et pouvant être vidée par au moins une ouverture de sortie, zone de chargement fermé en partie inférieure par un fond, **caractérisé en ce que** le fond est un fond double, pour lequel, au-dessus d'une surface de délimitation inférieure (12) et à distance de celle-ci, est disposée une surface perforée (13), formée de préférence de tôles perforées remplaçables, munie d'ouvertures de passage (14) est disposée, et au moins une ouverture de sortie (17a, 17b) étant reliée à l'espace intermédiaire, créé entre la surface de délimitation (12) et la surface perforée (13), ouverture de sortie par laquelle le produit en vrac peut être extrait de l'espace de chargement (2) par aspiration, le produit en vrac arrivant de l'espace de chargement (2) dans l'espace intermédiaire, en passant par les ouvertures de passage (14) de la surface perforée (13).

2. Espace de chargement selon la revendication 1, **caractérisé en ce que**, entre la surface de délimitation (12) et la surface perforée (13), est, respectivement sont disposée(s) au moins une paroi de séparation de fond (16), de préférence cependant plusieurs parois de séparation de fond (16), **en ce que** l'espace intermédiaire est subdivisé en au moins deux espaces partiels de fond (15) bordés chacun par une partie de la surface perforée (13), chaque espace partielle de fond (15) étant relié à une ouverture de sortie (17a, 17b).

3. Espace de chargement selon la revendication 2, **caractérisé en ce que** les ouvertures de sortie (17a, 17b) débouchent dans une zone d'aspiration (21) commune et, de préférence, est prévu un dispositif de fermeture (18a, 18b, 19, 20) pouvant être commandé, permettant au choix de fermer et d'ouvrir les ouvertures de sortie (17a, 17b) souhaitées, de sorte que la zone d'aspiration (21) peut être reliée à des zones partielles de la surface perforée (13).

4. Espace de chargement selon la revendication 2, **caractérisé en ce que** le dispositif de fermeture (18a, 18b, 19, 20) comprend sur chaque ouverture de sortie (17a, 17b) un organe de fermeture (18a, 18b), en particulier un registre, organe de fermeture ou registre actionnable, le cas échéant, mécaniquement, de préférence cependant fluidiquement - hydrauliquement ou pneumatiquement - l'actionnement se faisant, de préférence, depuis une commande centrale (20).

5. Espace de chargement selon la revendication 3 ou 4, **caractérisé en ce qu'**une soufflante est raccordée côté aspiration à la zone d'aspiration (21) et présente côté refoulement, une ouverture de transfert (25) susceptible d'être reliée à une conduite de transfert, la soufflante étant susceptible d'être entraînée, de préférence électriquement, à l'aide d'un entraînement à courant alternatif devant être raccordé au réseau électrique, le cas échéant cependant également avec un entraînement hydraulique ou par un moteur à combustion.

6. Espacé de chargement selon l'une des revendications 2 à 5, **caractérisé en ce que** les parois de séparation de fond (16) s'étendent 'dans la direction longitudinale ou bien cependant en direction transversale de l'espace de chargement (2), et des espaces partiels de fond (15), en forme de canaux, sont formés de manière correspondante, espaces sur les faces frontales desquelles sont disposées, les unes à côtés des autres, chaque fois une ouverture de sortie (17a, 17b), lesdites ouvertures de sortie (17a, 17b), débouchant en particulier directement dans un espace transversal ou un espace longitudinal servant de zone d'aspiration (21), ou bien étant le cas échéant reliées à la zone d'aspiration (21) par l'intermédiaire de conduites tubulaires (22) guidées ensemble, en particulier en tracés en forme de racines.

7. Espace de chargement selon l'une des revendications 2 à 6, **caractérisé en ce que** chaque zone de chargement (2a, 2b) fermée est susceptible d'être reliée à l'ambiance par l'intermédiaire d'une liaison d'équilibrage d'air, en particulier par au moins une ouverture munie d'un filet ou d'une grille (8), ayant de petites ouvertures de passage.

8. Espace de chargement selon l'une des revendications 2 à 7, **caractérisé en ce que**, dans l'espace de chargement (2), au moins une paroi de séparation d'espace de chargement (5) est disposée de manière que l'espace de chargement (2) soit subdivisé en au moins deux espaces partiels de chargement (2a, 2b), à chacun desquels est associé au moins un espace partiel de fond (15), de préférence chaque espace partiel de fond (15) n'étant associé qu'à l'un des au moins deux espaces partiels de chargement (2a, 2b).

9. Espace de chargement selon la revendication 8, **caractérisé en ce que** les ouvertures de remplissage (7) de tous les espaces partiels de chargement (2a, 2b) sont disposées directement les unes à côté des autres, et **en ce que** des tubes de remplissage (6), venant des ouvertures de remplissage (7), sont guidés dans les espaces partiels de chargement (2a, 2b) respectifs.

10. Espace de chargement selon l'une des revendications 1 à 8, **caractérisé en ce que** l'espace de chargement (2) est construit sur le châssis d'un semi-remorque, en particulier d'un semi-remorque EURO-Jumbo, d'une remorque, d'un camion, d'un conteneur, d'un pont de transfert ou, le cas échéant également, d'un véhicule ferroviaire, ou d'un insert pour navire, la structure étant réalisée avec des éléments fixes, faisant office de structure en caisson, ou, le cas échéant, avec des bandes textiles ou en matière synthétique, faisant office de structure de bâche.
